(19) Europäisches Patentamt
European Patent Office
Office européen des brevets

(11) **EP 3 739 183 A1**

(12) **EUROPEAN PATENT APPLICATION**

(43) Date of publication:
**18.11.2020 Bulletin 2020/47**

(21) Application number: **19186064.2**

(22) Date of filing: **12.07.2019**

(51) Int Cl.:
*F02B 75/04* (2006.01)    *F01M 1/00* (2006.01)
*F01M 1/06* (2006.01)    *F02B 75/32* (2006.01)
*F16C 7/04* (2006.01)    *F16C 9/04* (2006.01)
*F16C 11/02* (2006.01)    *F16C 27/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.05.2019 GB 201906890**

(71) Applicant: **Habib, Mustafa
East Riffa (BH)**

(72) Inventor: **Habib, Mustafa
East Riffa (BH)**

(74) Representative: **Reinhardt, Markus
Patentanwaltskanzlei Reinhardt
Postfach 11 65
83225 Aschau (DE)**

(54) **AN INTERNAL COMBUSTION ENGINE CRANKSHAFT AND CONNECTING ROD ASSEMBLY, AND PARTS FOR AN INTERNAL COMBUSTION ENGINE CRANKSHAFT AND CONNECTING ROD ASSEMBLY**

(57) The invention relates to an internal combustion engine crankshaft and connecting rod assembly 10.

Figure (1)

Printed by Jouve, 75001 PARIS (FR)

**Description**

The invention relates to an internal combustion engine crankshaft and connecting rod assembly, and parts for an internal combustion engine crankshaft and connecting rod assembly. One of the parts is a connecting rod and another of the parts is a crankshaft.

In a conventional reciprocating internal combustion engine thermal energy of fuel is converted into torque on the crankshaft. In particular, cycling loads applied to the piston, due to alternating pressure of combustion gases in the cylinders, are transmitted via the con rod big end, to the crankshaft. The con rod big end comprises a slider bearing for a crankshaft pin. The sliding bearing provides a distribution of the applied load over a relatively wide area, making it suitable for the purpose. Without the slider bearing the inside surface of the con rod big end would wear out. The slider bearing wears out but it is appreciably more easily replaced than the con rod itself.

A problem with known reciprocating internal combustion engine is that at the Top Dead Centre (TDC) position of a piston, i.e. furthest from the crankshaft, the force applied by the piston is applied straight in line with the axis of the crankshaft, meaning no torque, or turning force, can be applied to the crankshaft. No solution to this problem exists. In the case of the conventional engine it does not rotate neither right nor left due to the even force distribution. Also, at end of compression stroke, just before the TDC position of the piston, the piston applies a negative torque to the crankshaft. The piston before the TDC of the expansion stroke consumes energy from the flywheel and other rotating parts so there a negative torque at end of compression stroke. The conventional engine keeps rotating in the prescribed direction due to the stored energy provided by the flywheel and other rotating parts, if not for the flywheel and other rotating parts the rotation will be disrupted.

In an ICE, the crankshaft has a plurality of shafts that are offset from the crankshaft longitudinal axis, so as to convert the downward motion of a piston into rotational movement of the crankshaft. This offset does not produce a torque at top dead centre because the con rod and the crank are collinear at the top dead centre and therefore do not have an arm to produce a torque. In some known ICE arrangements, during the power stroke, when the force is a maximum, the longitudinal axis of the cylinder casing is offset from the longitudinal axis of the crankshaft, so as to reduce sliding resistance/friction between the piston and the cylinder casing wall, so that the piston thrust is applied in a direction that coincides with the longitudinal axis of the cylinder casing. This arrangement does not significantly increase overall power. This arrangement does not produce a torque at top dead centre, again because the con rod and the crank are collinear at the top dead centre.

Increasing the starting pressure of the gas during the expansion phase can increase the work extracted but not at the TDC position of a piston.

An aim of the present invention is to provide improved power transfer from the connecting rod to the crankshaft and/or alternative means of power transfer from the connecting rod to the crankshaft.

According to a first aspect of the invention there is provided an internal combustion engine crankshaft and connecting rod assembly in accordance with Claim 1. In this way, at the location of the second part, the inside surface of the big end of the connecting rod has less stiffness with respect to the slider bearing and, consequently, with respect to the crank pin. There is a slower force build up on the less stiff second part than on the stiffer first part.

According to a second aspect of the invention there is provided an internal combustion engine connecting rod in accordance with Claim 11.

According to a third aspect of the invention there is provided an internal combustion engine crankshaft in accordance with Claim 21.

The third aspect of the invention may comprise features corresponding to the principals involved in the dependent claims that relate to the second aspect of the invention. The second aspect of the invention and third aspect of the invention may be combined. An internal combustion engine crankshaft and connecting rod assembly may comprise the second aspect of the invention and/or third aspect of the invention.

Preferably, where the technique of modifying the con rod is employed, all con rods are modified, so as to prevent imbalances. Similarly, where the technique of modifying the crankshaft pin is employed, all crankshaft pins are modified. Similarly, where the technique of modifying the crankshaft web is employed, all crankshaft webs are modified. The invention is preferably applied to all of the con rods employed in an internal combustion engine.

According to a fourth aspect of the invention there is provided an internal combustion engine crankshaft and connecting rod assembly in accordance with Claim 24.

According to a fifth aspect of the invention there is provided an internal combustion engine crankshaft in accordance with Claims 1 and 29.

Other optional and preferred features of the invention are set out in the dependent claims, and the description, below. The features of one aspect of the invention can be combined in any complimentary manner, with one or more features of another aspect of the invention, the dependent claims, and/or with one or more features of the description, where such a combination of features would provide a working embodiment of the invention.

An internal combustion engine connecting rod in accordance with the invention, and an internal combustion engine crankshaft and connecting rod assembly in accordance with the invention, will now be described, by way of example only, with reference to the accompanying drawings, in which,

Figure 1 is a typical 4 stroke PV-diagram, also referred to as the Otto cycle,

Figure 2 (a) is a conceptual block diagram and graphs illustrating a comparison of results illustrating gas force transfer into crank torque for a conventional Slider Crank Mechanism (hereinafter referred to as a SCM),

Figure 2 (b) is a conceptual block diagram and graph illustrating a comparison of results illustrating gas force transfer into crank torque for a modified SCM,

Figure 2 (c) is a graph illustrating a comparison of results illustrating gas force transfer into crank torque for a conventional SCM and a modified SCM engines,

Figure 2 (d) shows graphs which illustrating a position on the 4 stroke PV-diagram at which the modified SCM engines has improved gas force transfer into crank torque than for a conventional SCM,

Figure 3 is (a) A typical slider crank mechanism, (b) An approximate force (pressure) distribution at the connecting rod big end and (c) Hydrodynamic Lubrication (HL) pressure profile, (d) Comparison between Elastohydrodynamic Lubrication (EHL) pressure and Hertz contact pressure. Figures (b), (c) and (d) are depicted with exaggerated clearance,

Figure 4 is the Minimal Modification Mechanism (MMM) slider crank mechanism (SCM), (a) mechanism configuration showing location of soft component, (b) the proposed bearing geometry, (c) the hydrodynamic oil film pressure distribution at the connecting rod big end-journal revolute joint (dashed curve for conventional and solid curve for the modified),

Figure 5 shows conceptual schematic drawing illustrating the effect of the *'soft pad'* joint on the transient behavior of the (a) oil film force components $(F_r^M, F_t^M)$ where $F_t^M$ lags $F_r^M$ and (b) the conceptual effect of the stiff and soft pad joints on the output torque $T_2^M$.

Figure 6 shows phase angle between the gas force G and oil film force components for a) conventional and b) modified mechanisms c) Basic geometry of modified con-rod big end journal bearing (conceptual illustration),

Figure 7 is an embodiment of the invention. (a)The connecting rod big end housing geometrical recess (b) the soft pad, (c) enlarged view showing the soft pat mounted between the big end and the bushing, (d) the modified connecting rod, (e) the connecting rod end product made by powder metallurgy (f) the connecting rod end product made by Chemical Vapour Deposition, (CVD) technique,

Figure 8 shows kinematics and dynamics of the modified SCM, (a) The SCM configuration, and (b) kinematics of the SCM, and (c) dynamic forces with respect to the inertial frame, Figure 9 shows basic geometry of con-rod big end journal bearing,

Figure 10 shows a Winkler surface model to compute elastic deformation $h_e$,

Figure 11 shows a computational procedure to compute the output torques of the SCM and MMM,

Figure 12 shows a Slider crank mechanism model, (a) conventional, (b) equivalent mechanism with two links, (c) equivalent mechanism with two springs, and

Figure 13 shows an alternative embodiment of the invention, a modified crankshaft web.

Figure 14 is an embodiment of the invention. (a) The connecting rod big end housing geometrical recess (b) the soft pad, (c) enlarged view showing the soft pat mounted between the big end and the bushing, (d) the modified connecting rod, (e) the connecting rod end product made by powder metallurgy (f) the connecting rod end product made by Chemical Vapour Deposition, (CVD) technique,

Figure 15 illustrates the con rod forces $F_{32}$ and $F_{32}^M$ comparison and how the force $F_{32}^M$ is lagging $F_{32}$ due to the

soft pad effect, and the key values of $F_{32}$ and of $F_{32}^M$ at TDC and $\Delta\theta_2 = \omega_2 t_d$

Figure 16 shows the resulting torques for both engines where the modified MMM engine has a superiority over the conventional engine.

## 1a. Introduction

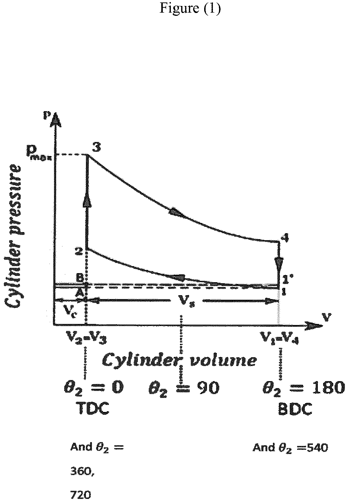

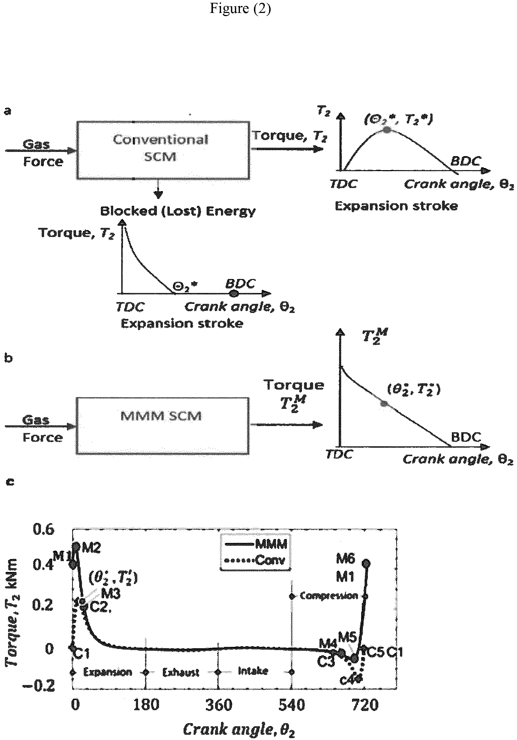

Only about 14%-30% of the energy from the fuel one puts in a conventional vehicle is used to move it down the road, depending on the drive cycle (as confirmed at reference 1 below). The rest of the energy is lost to engine and driveline inefficiencies or used to power accessories (as confirmed at reference 2 below). Therefore, the potential to improve fuel efficiency with advanced technologies is enormous (as confirmed at references 3, 4 below). The efficiency of an engine is defined as the ratio of useful work done to the heat added by the gasoline combustion. It is important to note that the term work done relates to the power delivered at the clutch or at the driveshaft. Thus an engine not delivering any work to the clutch has zero efficiency. For any heat engine the work which can be extracted from it is proportional to the difference between the starting pressure and the ending pressure during the expansion phase (as confirmed at reference 2 below). Hence, increasing the starting pressure is an effective way to increasing the work extracted. To increase the pressure at point 3 of Figure 1, it depends on the thermal combustion and timing of both spark ignition and valves. Increasing starting pressure increases work, but it does not increase the efficiency of transfer of energy from the gas to the crankshaft rotation at TDC, hence the invention is employed. Unfortunately, the conventional internal combustion engine mechanism does not fully transfer the whole piston gas force into the transmission system during the expansion cycle phase. Due to this mechanism shortage, the engine's efficiency is significantly reduced, see figures 1 and 2a (as confirmed at reference 2 below). Therefore, the objective of this invention is to tackle this shortage and utilize the gas force to transform it into optimally increased torque (figures 2b and 2c). Figure 2c shows simulation results of a 1 cylinder engine to PV-data similar to those shown in figure 1, but after the new idea is applied. The PV-data are applied to the conventional and modified engines. The curve C1-C2-C3-C4-C5C1 is the output torque of the conventional engine while the curve M1-M2-M3-M4-M5-M6M1 is for the proposed engine (named herein as the MMM engine). One observes that the area enclosed by the curves *C1-M1-M2-M3-C2C1* is the added area due to the MMM engine. And the area enclosed by the curves *C3-C4-C5M6-M5-M4-C3* is the saved area due to the MMM engine. Therefore, at least double the conventional power could be achieved by this modification.

On Figure 1,
Point 1: Beginning of compression stroke and end of intake stroke. Crank angle $\theta_2 = 540°$
Point 1': approximate beginning of exhaust stroke. Crank angle $\theta_2 = 180°$
Point 2: End of compression stroke. Crank angle $\theta_2 = 720°$
Point 3 Beginning of expansion stroke (max pressure). Crank angle $\theta_2 = 0°$
Point 4: End of expansion stroke. Crank angle $\theta_2 = 180°$
Point A: beginning of intake stroke. Crank angle $\theta_2 = 360°$
Point B: End of exhaust stroke. Crank angle $\theta_2 = 360°$

$$V_1 = V_4 = V_c + \ V_S = \ maximum \ \ cylinder \ \ volume$$

$V_S$ = displaced or swept volume,

$V_C$ = $V_2$ = $V_3$ = Clearance volume

$$\text{Compression ratio} \quad r_c = \frac{Maximum \ \ cylinder \ \ volume}{Minimum \ \ cylinder \ \ volume} = \frac{V_c + \ V_S}{V_c}$$

In Figure 1 the point ¼ of the way along the curve 3 - 4 correlates to 45 degrees.
L denotes the angular rotation of crank, TDC being at 0 degrees, 360 degrees, and 720 degrees.
*$L_i$: $\theta_2$* **Denotes the line number *i* at crank angle $\theta_2$ that intersects the output torques for the conventional and modified engines for comparison purposes.**

**1b. Overview**

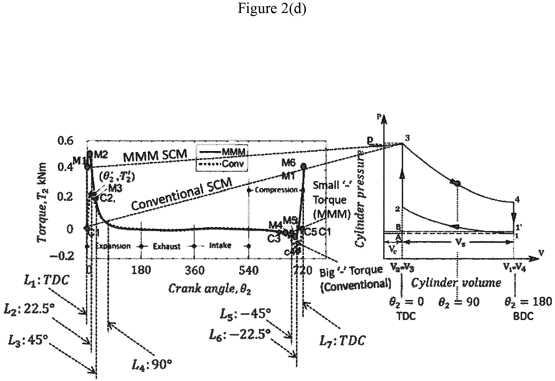

Figures 2a and 2b show conceptual block diagrams illustrating how the gas force is transferred into torque in both the conventional engine and the proposed innovative engine. To illustrate this further, consider a conventional engine at the beginning of the expansion stroke (in spite of having maximum gas pressure $p_{max}$, point 3 in figure 1), we get zero torque at this crank angle (see Figure 2a and 2c point C1 where at crank angle $\theta_2 = 0$, we have the torque $T_2 = 0$). It is known that at the TDC the torque produced at crankshaft axis A is (almost) zero. This invention aims to overcome this disadvantage, i.e. to obtain optimized greater torque at maximum gas pressure, $p_{max}$ as shown in the block diagram, figure 2b and point M1 in figure 2c) and will be explained below. The Applicant is the first to remedy the problem in this way. Figure 2 (d) shows at point 3, and after point 3 on the curve 3 - 4, on the 4 stroke PV-diagram the modified SCM engine has improved transfer of gas force into crank torque than for a conventional SCM. Figure 2 (d) also shows at the point just before point 2 on the curve 1' - 2 the modified SCM engine (i.e. the MMM) has a small negative torque in contrast with a big negative torque of a conventional SCM.

Figure 2(d) also shows at position 2 on the 4 stroke PV-diagram at which the modified SCM engines has improved gas force transfer into crank torque than for a conventional SCM.

**2. Backgrounds**

**Modelling con-rod big end as a revolute joint with clearance**

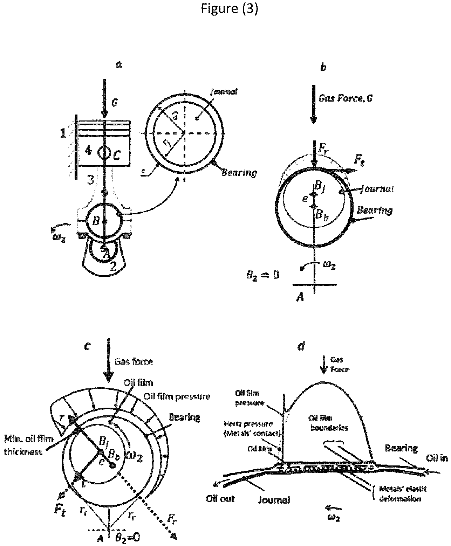

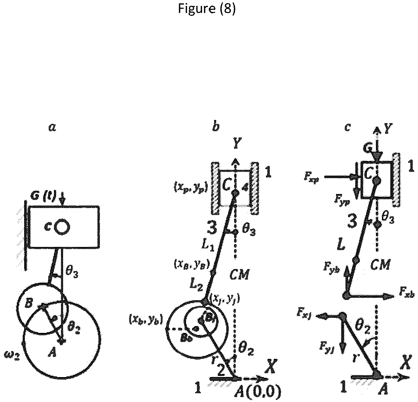

The known crankshaft always rotates in the same prescribed single direction. It is driven by the starting motor in the specified direction. If not, the valves will hit the pistons and the spark plugs will not ignite at the prescribed instant. The known crankshaft is set up to rotate as predesigned and the starting motor drives the crank in the prescribed direction. Additionally, the flywheel and other rotating parts ensure that the crank shaft keeps running in the prescribed direction of rotation. Figure 3a depicts a conventional slider crank mechanism rotating with crank speed ($\omega_2$, designed to rotate in a counter clockwise (CCW) direction and having four bodies; the ground 1 (cylinder block and crank case), crank 2, connecting rod 3 and the piston 4. The gas force, G, is transferred into torque through the connecting rod at crankshaft axis A. The connecting rod big end *B* (see figure 3a), has a bushing (sleeve) bearing which is supported by the big end inner surface while the bushing inner surface is in contact with the crank pin (journal) where the lubricating oil fills the clearance, ccbetween them. ($c = r_b - r_j$) between the journal and the bearing is typically one thousandth of the journal diameter as in joint B figure 3a and 3b. The fluid film in revolute joint B reduces friction and wear, provides load capacity, and adds damping to dissipate undesirable mechanical vibrations. Under an applied load such as the gas force *G*, the journal center is displaced from the bearing center and the lubricant is forced into a convergence clearance space causing a build-up of pressure (figure 3c). The high pressure generated in the lubricant film act to keep the journal (crank pin) and the bearing (Bushing sleeve) surfaces apart (see the centers $\boldsymbol{B}_b$ and $\boldsymbol{B}_j$ in figure 3b and 3c) [Reference 5 below]. In figure 3b, the revolute clearance joint is persistently treated as ideal joint, where the deformation of the bushing caused by the pin under an external force G is symmetrical along the external force direction. It is important to point out that, when the clearance is present in a revolute joint (as in joint *B*), two kinematic constraints are removed and two degrees of freedom are introduced instead. The dynamics of the lubricated revolute joint is then controlled by hydrodynamic, HL (Elastohydrodynamic EHL/ or contact) forces built up by the lubricant fluid (and elastic deformation in case of having EHL) between the journal and bearing. The HL/EHL (or contact forces which are applied orthogonally to the plane of contact) are evaluated from the state of variable of the system (coordinates of the bushing centre $\boldsymbol{B}_b$ ($x_b, y_b$) and the journal centre $\boldsymbol{B}_j(x_j, y_j)$ as shown in figures 3b, 3c and 8b) and are included into the equations of motion of the mechanical system to compute the eccentricity, and bearing loads). Thus, whilst a perfect (ideal) con-rod big end revolute joint imposes kinematic constraints, a revolute clearance joint (which is considered in this invention as in the con-rod big end) leads to force constraints. Therefore, con-rod big end bearing is defined as force-joints instead of kinematic joints. The dynamics of the joint are then controlled by forces working on the journal and bearing as will be explained later.

Referring to Figure 3, the displacement of the crank pin (journal) center relative to the bearing center is known as the eccentricity $e$ ($e = B_j - B_b$) which are related to the $r$ - $t$ coordinate system (see figure 3c) as will be explained later. The journal's eccentric position within the bearing clearance is influenced by the load (mainly gas force) transmitted from the bearing through the oil film pressure. The amount of eccentricity adjusts itself until the load is balanced by the pressure generated in the converging lubricating film, see figure 3c. The line drawn through the journal center $B_j$ and the bearing center $B_b$ is called the line of centers (eccentricity line, given by vector $e$ as illustrated in figure 3c). The pressure generated, and therefore the load-carrying capacity of the journal-bearing, depend on the journal eccentricity, the relative angular velocity $\omega_r$ between the journal $\omega_2$ and bearing $\omega_3$ speeds ($\omega_r = \omega_2 - \omega_3$), the effective viscosity of the lubricant and the bearing dimensions and clearance. In figure 3c, the forces $F_r$ and $F_t$ at $\theta_2 = 0$ are the components in radial (along the line of centers, $e$) and tangential directions respectively.

**The Idea**

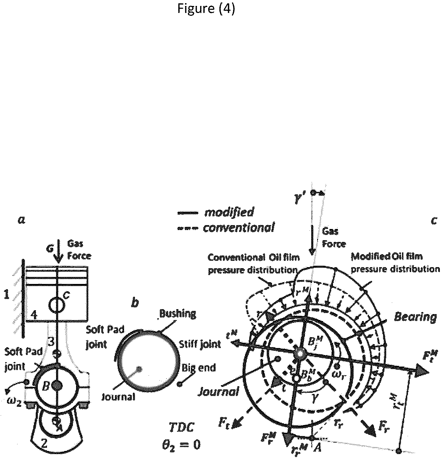

At the connecting rod big end-journal pin contact surface (revolute joint B, see figure 4a), the gas force is transmitted into the crank pin. At the TDC of the beginning of the expansion stroke (see figure 3b for ideal pressure distribution), the resulting force passes through the crank axis A, therefore produces zero torque about the crankshaft A (i.e., at the TDC,, we have $T_2 = 0$, where $\theta_2$ and $T_2$ are the crank angle and the crank torque respectively, see figure 2c point C1). In figure 3c the oil film pressure transmits the normal $F_r$ and tangential $F_t$ force components (which are related to the $r$ - $t$ coordinate system) into the crank pin. At the TDC where $\theta_2 = 0$, the resultant of these hydraulic force components ($F_r$, $F_t$) produces zero torque about crank axis A. Not only it transmits zero torque at TDC, but also it transmits a negative torque just before TDC of the power stroke i.e., shortly before $\theta_2 = 0$ it produces a negative torque about crank axis A. This drawback is one of the main causes of reducing engine mechanical efficiency dramatically. Therefore, the objective of the current invention is to overcome this weakness.

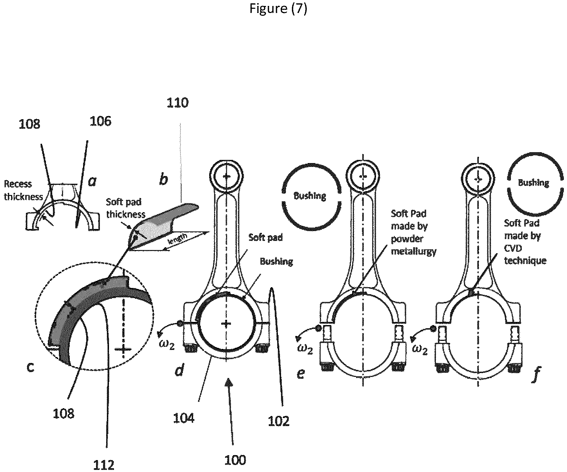

Figure 4a, shows a modified slider crank mechanism configuration where a 'soft pad' component is fitted between the connecting rod big end housing and the bushing. To install the 'soft pad' a geometrical recess is made in the connecting rod big end housing. It is important to note that the position of the geometrical recess (and therefore the location of the soft pad) depends on the direction of rotation of the crank. In figure 4a the crank shaft rotates in counter clockwise direction (here $\omega_2$ is CCW direction). The place of the soft pad depends on the direction of predesigned rotation as shown in figure 4a, 4b and 4c. The description relating to Figure 7 is relevant to this. On the other side, the stiff joint is kept unchanged as in the conventional SCM. When the power stroke starts, the gas force G pushes the connecting rod down which applies hydrodynamic force components $\left( F_r^M,\ F_t^M \right)$ on the crank pin, see figure 4c solid arrows. These components are generated by the oil film pressure. Comparing these two components $\left( F_r^M,\ F_t^M \right)$ shown as solid arrows with the conventional big end joint components ($F_r$, $F_t$), shown also in figure 4c as dashed arrows just for comparison, it is observed that that the modified $r^M$ - $t^M$ coordinate system is rotated against $\omega_2$ an angle $\gamma$ (i.e., clockwise). Now in the interval where the force component $F_t^M$ produces a negative energy, it is deliberately made to act slower than the component $F_r^M$ i.e., the force component $F_t^M$ lags the force component $F_r^M$. This will reduce its negative effect on the output energy as much as possible during the interval where it produces a negative torque. This contributes to make up for the conventional system drawback as will be explained below. Thanks to the current invention, now the net torque $T_2^M$ produced by the force components $\left( F_r^M,\ F_t^M \right)$ at the TDC of the power stroke and in its neighborhood (specially just before the TDC) is positive, as shown in figures 2b and 2c.

**Illustration:**

The stiff joint is kept unchanged as in the conventional SCM, figures 4a, 4b and 4c. When the power stroke starts, the gas force G pushes the connecting rod down which applies force components $F_r^M$ (coming mainly from the stiff joint) and $F_t^M$ (coming mainly from the 'soft pad' joint). The force component $F_r^M$ has a torque arm vector $r_r^M$ about the crank shaft axis A as shown in Figure 4c which applies a torque about the crank shaft A, $T_{2r}^M$ which is given by

$$T_{2r}^M = \ r_r^M \ \times \ F_r^M > 0 \qquad (3.1)$$

Equation (3.1) and figure 4c illustrate that the force component $F_r^M$ produces a positive torque about crank axis *A*. Unfortunately, the other force component $F_t^M$ applies a negative torque about A, $T_{2t}^M$, which is computed from the equation (see figure 4c)

$$T_{2t}^M = \ r_t^M \ \times \ F_t^M < 0 \qquad (3.2)$$

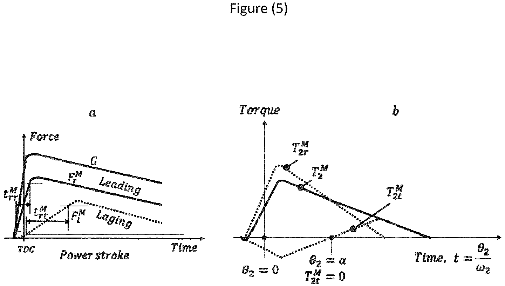

Referring to Figure 4, the torque $T_{2t}^M$ gives negative energy to the crank (which is bad), see figure 4c. If one makes $F_t^M$ slower, i.e. $F_t^M$ lags the force component $F_r^M$ (i.e., $F_t^M$ rise time is made bigger than the rise time of $F_r^M$ which is used as an approximate measure of signal response speed in the sense of a second order system to a step input) this will produce a net positive torque at and in the neighborhood of the TDC of the power stroke and shortly before TDC and therefore, one will be able to reduce the negative effect of the force component $F_t^M$ on the output net torque which is given by the following formula and see figure 5.

$$T_2^M = T_{2r}^M + T_{2t}^M > 0 \quad \text{for } 0^- \leq \theta_2 \quad (3.3)$$

Equation (3.3) illustrates that the main net torque at the crank shaft A is always positive just before the TDC of the expansion stroke. Doing so, we can significantly reduce the negative energy contributed by the force component $F_t^M$, hence making optimum use of most of the positive energy produced by $F_r^M$ for $0^- \leq \theta_2$. In other words, (in mechanical vibration/ Control, the dynamic input force (in our case G) is transmitted through the foundation (in our case the soft pad stiff side, bushing and oil) to the ground (in our case the journal pin) is equal to the spring forces plus the damping forces. We call these two forces $(F_t^M, F_r^M,$ transmitted forces to foundation). $F_r^M$ contributes positively to the crank shaft rotation i.e. it gives energy to the crank shaft and this is good. But $F_t^M$ (due to the invention) works against the rotation of the crank shaft and this is bad i.e. it takes energy from the crankshaft. Therefore in the invention, in order to reduce its negative effect on the output energy $F_t^M$ is deliberately made slower than the other component $F_r^M$. The time lag $t_d$ can be designed to produce only positive torque ($t_d$ is the time where $F_t^M$ is intentionally made to behave slower than $F_r^M$ in order to reduce its negative effect on the net output torque.

The slow or lag rate of $F_t^M$ is roughly measured by the time lag $t_d$ between the rise times of the components ( $F_r^M$ and $F_t^M$ ) or the torque components ( $T_{2r}^M$ and $T_{2t}^M$ ) denoted for each by $(t_{rr}^M, t_{rt}^M)$ as shown in figure 5a and 5b. The difference between the rise times ( $t_{rr}^M$ and $t_{rt}^M$ ) is given by the time lag $t_d$ which is mainly a function of the crank-connecting rod relative speed $\omega_r$, the equivalent stiffness and damping of the soft pad joint relative to those of the stiff joint (and to a smaller extent to the corresponding values due to cross couplings).

Referring to Figure 5, in the following paragraphs, rough guide for the selection of the soft pad stiffness $k_t^M$. For a weak elastic coupling, the rise time concept for a second order system to a step input is utilized. The rise time for the stiff con rod $t_{rr}^M$ is approximated by

$$t_{rr}^M \cong \frac{\pi + 2\zeta}{2\omega_n\sqrt{1-\zeta^2}} \approx \frac{\pi}{2\omega_n} \quad \text{for small damping ratio } \zeta \quad (3.4)$$

The corresponding rise time for a con rod with a soft pad joint $t_{rt}^M$ is given by

$$t_{rt}^M \approx \frac{\pi}{2\omega_n^M} \quad (3.5)$$

Where $\omega_n^M$ (the natural frequency for a con rod with a soft pad) and $\omega_n$ (is the natural frequency for a con rod of conventional engine) are given by the first eigenvalues $\lambda_1 = \left(\omega_n^M\right)^2$ and $\lambda_1 = (\omega_n)^2$ for the modified and conventional piston-con rod respectively. The time lag $t_d$ is then given by, see figure 5a

$$t_d \cong t_{rt}^M - t_{rr}^M \qquad (3.6)$$

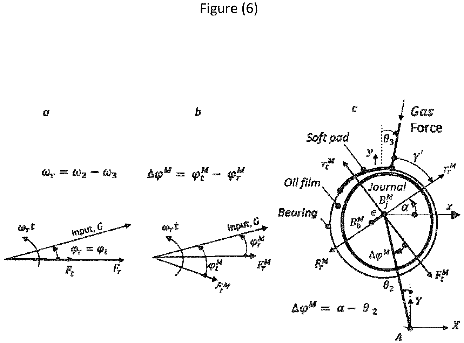

The time lag $t_d$, is designed based on the interval where position vector of $F_t^M$ w.r.t. the crank shaft axis $A$ is producing negative torque. Figure 4c illustrates the pressure profiles (when the modified mechanism is applied, solid curve) compared with the pressure profile of the conventional mechanism, dashed curve. In the conventional engine, due to the high stiffness and very small damping values, at the stiff joint, the gas force $G$ (input excitation) leads the oil film pressure generated force components ($F_r$, $F_t$) with a small phase angle $\varphi_r = \varphi_t$ as shown in figure 6a. Figure 6b shows the generated oil film pressure force components $\left(F_r^M,\ F_t^M\right)$ for the modified engine where the oil film forces $\left(F_r^M,\ F_t^M\right)$ have a phase difference between each other $\Delta\varphi^M$ which is given by

$$\Delta\varphi^M = \varphi_t^M - \varphi_r^M \qquad (3.7)$$

Where $F_r^M$ leads the component, $F_t^M$. The angles $\varphi_t^M$ and $\varphi_r^M$ represent the phase shifts between the force components $F_t^M$ & $F_r^M$ and the gas force, G respectively as shown in figure 6b. Note that the magnitude of the phase angle $\varphi_t^M (> \varphi_r^M)$ is due to the 'soft pad' joint which is designed to have an equivalent stiffness $k_t^M < k_r^M (= k_r)$ and an equivalent damping $c_t^M > c_r^M\ (= c_r)$ respectively. The phase difference $\Delta\varphi^M$ is taken equal to the angle elapsed from $\theta_2 = 0$ to the angle $\theta_2$ where the force component $F_t^M$ passes through the crank shaft axis A as will be illustrated later. Due to the phase difference $\Delta\varphi^M$ between the oil film force components $\left(F_r^M,\ F_t^M\right)$ as shown in equation (3.7), the time lag $t_d$ between components $\left(F_r^M,\ F_t^M\right)$ where $F_t^M$ lags $F_r^M$ can be computed by:

$$t_d = \frac{\Delta\varphi^M}{\omega_r} = \frac{\Delta\varphi^M}{\omega_2 - \omega_3} = \frac{\alpha}{\omega_2 - \omega_3} \qquad (3.8)$$

Where $\omega_2$ and $\omega_3$ are the crank and con-rod angular velocities in rad/s respectively.
Referring to Figure 6, the phase angle $\Delta\varphi^M$ is obtained by computing the eccentricity vector e (from the kinematic and dynamic motion of the SCM by computing the crank pin and the big end coordinates) from which transformation angle $\alpha$ can be computed.
The transformation angle $\alpha$ is the angle between the positive x-axis and the vector e as shown in figure 6c which will be explained in the mathematical modeling section.
The relationship is given by (see figure 6c)

$$\Delta\varphi^M = \alpha - \theta_2 \qquad (3.9)$$

When $\theta_2 = \alpha$ the force component $F_t^M$ passes through the crank axis A and is ready to produce a positive energy for the rest of the expansion stroke. Now for $\theta_2 \geq \Delta\varphi^M$, the force component $F_t^M$ can produce $T_{2t}^M \geq 0$ $\geq 0$

where the equal sign represents the end of the negative torque $T_{2t}^M$. The equivalent dynamic coefficients $(k_t^M, c_t^M)$ are carefully designed to produce the required phase angle $\Delta\varphi^M$ which achieves our objective i.e., $F_t^M$ should lag $F_r^M$ significantly which insures making use of gas force *Gin* an optimum way. This can be summarized as follows:

$$\Delta\varphi^M = \alpha - \theta_2 =$$

$$\begin{cases} \alpha & \text{for} \quad t = 0, \quad \theta_2 = 0, \quad F_t^M \quad \text{is} \quad \text{slower} \quad \text{than} \quad F_r^M \\ 0 & \text{for} \quad \theta_2 = \alpha, \quad F_t^M \text{ starts to give pos energy}, T_{2t}^M \geq 0 \end{cases}$$

$$(3.10)$$

Now let us illustrate how the equivalent dynamic coefficients $(k_t^M, c_t^M)$ are designed as simple as possible.

Let the soft pad stiffness $k_t^M = \dfrac{1}{\beta} k_r^M$ ( $k_r^M = k_r$ Which is the stiffness of the conventional joint) where $\beta > 0$ a constant to be determined as is follows. From equations (3.4)-(3.6), and (3.8) - (3.10) we get the relation

$$\beta = \left( \frac{2\alpha}{\pi(\omega_2 - \omega_3)} \sqrt{\frac{k_r^M}{m}} + 1 \right)^2 \qquad (3.11)$$

As an example, let $\alpha = \dfrac{\pi}{4}$ , $\omega_{23} = \omega_2 - \omega_3 = 3000$ rpm, $k_r^M = 1 \times 10^6 \dfrac{N}{m}$ , $m = 1$ *kg,* we get $\beta \approx 7$ and for better damping we take $c_t^M \geq 2c_r^M$.

## 4. Implementation

*(Reciprocating engine con-rod big end housing with a soft pad for higher engine efficiency)*

It is recommended to use powder metallurgy or Chemical Vapour Deposition (CVD) techniques in producing the soft pad joint.

Figure 7 shows a Con rod big end 100. The con rod big end 100 comprises a Big end first part 102 and a big end second part 104. The Big end first part 102 comprises a big end first part inside surface 106. The big end first part inside surface 106 is half of a generally circular cross section inside surface of the big end, the big end second part 104 providing the other half. In accordance with the invention, the big end first part inside surface 106 comprises a Big end first part inside surface recess 108. Also, in accordance with the invention, the assembly comprises a soft pad 110. The soft pad 110 is arranged in the recess 108, in such a way that the entire inside surface of the big end, including the inside surface of the soft pad, has a circular cross section. The soft pad 110 therefore sits between the inside surface of the big end and a (two-part) slider Bushing 112. In this way, at the location of the soft pad 110, the inside surface of the big end of the connecting rod has less stiffness with respect to the slider Bushing 112 and, consequently, with respect to the crank pin). The soft pad 110 extends from just before the TDC towards about 90 degrees from the TDC. After 45 degrees from the TDC, the more the soft pad 110 extends towards 90 degrees from the TDC the more effective the invention will be (because the useful torque will increase). However, the more the soft pad extends towards the 90 degrees from the TDC, the more noise and vibration will be produced. Therefore, the optimum value for how much the soft pad extends is between about 45 degrees from the TDC and about 90 degrees from the TDC. In one embodiment, the thickness of the second part of the inner mating surface is about 1 mm greater than the thickness of the slider bearing. In terms of the direction of rotation of the crank shaft, it is designed so that it tends to rotate towards the soft stiffness side. The soft piece 110 can cause noise due to vibration. Reducing the soft piece 110 extent below 90 degrees correspondingly reduces the noise. But if the soft piece 110 extent is significantly less than 90 degrees, it becomes less efficient. The soft piece 110 is positioned in the 90 degrees extent shown so that it can provide torque benefits in the expansion phase and in the compression phase. The softer piece only at the 90 degrees of the bearing periphery shown treats the negative effect of $F_t^M$, at the same time keeps the entire joint as strong as possible to overcome the effect of the added weakness due to the inclusion of the soft joint. The soft joint is developed to have less equivalent stiffness than in the conventional bearing i.e., $k_t^M < k_r^M$, therefore, at a segment of the soft pad that extends over 90 degrees, the soft pad is in interference fit with the bushing sleeve and this is sufficient to produce a $k_t^M < k_r^M$ and at the same time, to keep the overall joint as strong as that in the conventional joint.

In manufacturing the 'soft pad' itself with a specified stiffness and damping, it is recommended to use powder metallurgy manufacturing method where different metal powders are mixed in solid state. The metal powders have the required stiffness and damping properties which achieve the Applicant's objective ( $F_r^M$ leads $F_t^M$ which increases the output torque in a positive sense significantly, see figure 6c above). The powder metallurgy process generally consists of four basic steps: powder manufacture, powder blending, compacting, and sintering in a template to have the shape of the soft component as shown in figure 7b. Figures 7c and 7d show how the soft pad is firmly glued to the geometrical recess of the connecting rod big end housing. The inner surface of the 'soft pad' will be in contact (interference fit) with the bushing (bearing sleeve) outer surface. It is recommended to take the length of the 'soft pad' equal to the bearing length and to take the thickness of the 'soft pad' equal to the bearing thickness. It is well known that the bushing thickness (for small and medium size engines having around 100 kW) is about 2 mms and therefore the soft component thickness is about 2mms), see figure 7b.

In manufacturing the soft pad joint using Chemical Vapour Deposition, CVD technique, the con-rod big end housing is grinded to the film thickness of the CVD to be deposited to fill the grinded geometry space. CVD is a widely used materials-processing technology. The soft pad is obtained by applying solid thin-film coatings to the big end housing inner geometrical grinded (recess) surface. The deposited film contains various materials that have the required stiffness and damping properties which achieve our objective. The advantage of using one of the CVD techniques is due to its high accuracy besides it does not require big thickness to recess. In fact a geometrical recess thickness of less than 1 mm can work well. As in the case of using powder metallurgy technique, the inner side of the 'soft pad film' will be in contact (interference fit) with the bushing (bearing sleeve) outer surface. Figure 7f shows a schematic drawing of the con-rod 'soft pad film' location. Good results for the net output torque, $T_2^M$ (as shown in figures 2b and 2c) are obtained when

- the soft pad stiffness $k_t^M$ is designed to be in the range $\dfrac{k_r^M}{10} \le k_t^M \le \dfrac{k_r^M}{7}$ where $k_r^M$ is the conventional bushing equivalent stiffness, and

- the soft pad damping $c_t^M$ is taken in the range $3c_r \ge c_t^M \ge 2c_r$ where $c_r$ is the equivalent damping of the conventional busing.

In the conventional mechanism, the inside surface of the con rod big end that cooperates with the slider bearings has a uniform damping value of about 20 Ns/m. In the invention, the soft pad has a damping value of about 60Ns/m.

Figures 7e and 7f show, respectively, the modified (MMM) connecting rod end product with a 'soft pad' component and a soft pad made by Chemical Vapour Deposition, CVD.

### 5. Mathematical Model

### 5.1. Slider Crank Mechanism Kinematics and dynamics:

Figure 8 depicts the slider crank mechanism used in this invention. It consists of four rigid bodies that represent the crank, connecting rod, piston and cylinder block as a ground. Two ideal revolute joints and one ideal translational joint, as it is illustrated in Fig. 8a. One revolute joint with clearance exists between the connecting-rod big end and the crank pin, which is modelled as a lubricated joint. Due to the presence of the one lubricated revolute joint this system has three degrees of freedom. The acceleration due to gravity is taken as acting in the negative Y direction and the mechanism is defined as moving in a vertical plane.

**5.1a Slider Crank Mechanism Kinematics:**

• *The Piston kinematics:*

The displacement coordinates of the piston $(0, y_p)$ from the origin of the inertial frame XY is expressed by (figure 8b),

$$y_p = rcos\theta_2 + Lcos\theta_3 \qquad (5.1\text{-}1)$$

This expression can be differentiated once with respect to time to produce an expression for the linear velocity of the piston

$$\dot{y}_p = -r\omega_2 sin\theta_2 - L\omega_3 sin\theta_3 \qquad (5.1\text{-}2)$$

The velocity is differentiated to produce the linear acceleration of the piston mass

$$\ddot{y}_p = -r\dot{\omega}_2 sin\theta_2 - r\ \omega_2^2\ cos\theta_2 - L\dot{\omega}_3 sin\theta_3 - L\omega_3^2\ cos\theta_3 \qquad (5.1\text{-}3)$$

• *Connecting Rod kinematics:*

The displacement of the connecting rod center of mass $(x_B, y_B)$ from the origin of the inertial frame X0Y is expressed by(figure 8b),

$$x_B = -L_1 sin\theta_3, \qquad y_B = y_p - L_1 cos\theta_3 \qquad (5.1\text{-}4)$$

And The displacement of the connecting rod center of big end bearing $(x_b, y_b)$ from the origin of the inertial frame X0Y is expressed by (figure 8b),

$$x_b = -L_1 sin\theta_3, \qquad y_b = y_p - Lcos\theta_3 \qquad (5.1\text{-}5)$$

Differentiating the displacement respect to time to produce an expression for the linear velocity of the connecting rod center of mass $(\dot{x}_B, \dot{y}_B)$;

$$\dot{x}_B = -L\omega_3 cos\theta_3, \quad \dot{y}_B = \dot{y}_p + L_1\omega_3 sin\theta_3 \qquad (5.1\text{-}6)$$

Differentiating the velocity with respect to time to produce the linear acceleration of the connecting rod center of mass $(\ddot{x}_B, \ddot{y}_B)$;

$$\ddot{x}_B = -L_1\dot{\omega}_3 cos\theta_3 + L_1\omega_3^2 sin\theta_3\ , \qquad \ddot{y}_B\ =\ \ddot{y}_p + L_1\dot{\omega}_3 sin\theta_3 + L_1\omega_3^2 cos\theta_3 \qquad (5.1\text{-}7)$$

• *Crank Pin kinematics:*

The motion of the crank journal $(x_j, y_j)$ can be represented by the crank angular motion (figure 8b):

$$x_j = rsin\theta_2\ , \qquad y_j = rcos\theta_2 \qquad (5.1\text{-}8)$$

The velocity components of the crank journal $(\dot{x}_j, \dot{y}_j)$ is;

$$\dot{x}_j = r\omega_2 cos\theta_2, \qquad \dot{y}_j = -r\omega_2 sin\theta_2 \qquad (5.1\text{-}9)$$

The acceleration components of the journal $(\ddot{x}_j, \ddot{y}_j)$

$$\ddot{x}_j = r\dot{\omega}_2 cos\theta_2 - r\ \dot{\omega}_2^2\ sin\theta_2, \qquad \ddot{y}_j = -r\dot{\omega}_2 sin\theta_2 - r\ \dot{\omega}_2^2\ cos\theta_2 \qquad (5.1\text{-}10)$$

**5.1b Slider Crank Mechanism Dynamics:**

**Piston-Connecting Rod Subsystem**

The dynamics relations for the piston-connecting rod subsystem (modeled as an ideal joint) and crank subsystem with clearance between connecting rod and crankshaft joint, are established based on the configuration in figure 8c.

The pressure values generated by gas combustion during the expansion stroke are multiplied by the piston area to produce the gas pressure forces, $G(t)$, acting on the top of the piston. The gas force G works as the driving force for the whole system. The friction force on the piston has been considered negligible compared to the combustion force and the vertical inertia force of the piston. It is assumed that prismatic joint between the piston and the cylinder block and the revolute joint between the piston and the connecting rod small end are ideal joints while the connection between the connecting rod big end and the crank pin is treated as a revolute joint with clearance. Therefore, the big end-the crank pin revolute joint has to be balanced by the hydrodynamic forces generated in the lubricating oil. The relative displacements of the bearing and journal centers i.e. $(x_b, y_b)$ and $(x_j, y_j)$, respectively, with reference to global XY axes, and the balance of journal forces components, $F_{xj}$ and $F_{yj}$ by the hydrodynamic forces generated by lubrication film components $F_{xb}$ and $F_{yb}$ are shown in figure 8c. Based on the arrangement shown in figures 8c, the governing equations of motion for piston and connecting rod can be obtained by Lagrange formulation as [Reference 10 below], see figure 8c:

$$\begin{bmatrix} m_p + m_b & -L_1 m_b sin\theta_3 \\ -L_1 m_b sin\theta_3 & I_b + L_1^2 m_b \end{bmatrix}\begin{bmatrix} \ddot{y}_p \\ \dot{\omega}_3 \end{bmatrix} + \begin{bmatrix} 0 & \omega_3 L_1 m_b cos\theta_3 \\ 0 & 0 \end{bmatrix}\begin{bmatrix} \dot{y}_p \\ \omega_3 \end{bmatrix}$$

$$= \begin{bmatrix} F_{yb} - G \\ F_{xb} Lcos\theta_3 - F_{yb}L\ m_b sin\theta_3 \end{bmatrix} \qquad (5.1\text{-}11)$$

The moment balance equation on the crank shaft main bearing about axis 0 is given by:

$$I_c\ \dot{\omega}_2 = F_{xj} rcos\theta_2 + F_{yj}r\ sin\theta_2 - T_f - T_L \qquad (5.1\text{-} 12)$$

Where $I_c$ is the moment of inertia of the crankshaft (plus flywheel), $T_f$ is the friction and pumping torque of the engine, $T_L$ is the external load imposed on the engine. The friction and pumping torque of the engine, $T_f$ is given by [Reference 11 below]

$$T_f = 0.697 + \omega_2(2.995 \times 10^{-8}\ n - 1.487 \times 10^{-5})V_d \qquad (5.1\text{-}13)$$

**5.2 Big End Hydrodynamic Forces**

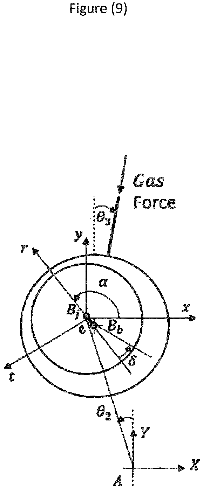

The Reynolds equation is used to solve the hydrodynamic forces in the lubrication oil. Since the big end bearings in reciprocating engines are subjected to loads that vary in both magnitude and direction, the most appropriate model for hydrodynamic forces for variable rotating loads is adapted from the detailed analysis of the hydrodynamic forces of different journal bearings in Pinkus and Sternlicht [as confirmed at Reference 12 below]. The geometry of the big-end bearing is shown in Figure 9. There are two coordinate systems. One is the global *XY* system and the other is related to the eccentricity *r - t* system, based on the diameter through the point of minimum oil thickness. The *Z* direction is inline with the length of the bearing, $\alpha$ is the coordinate angle between the positive r direction and the positive *X* direction. Since the load on the big-end journal bearing is a variable rotating load, $\alpha$ should be a combination of attitude angle and rotation angle of the load. *e* is the eccentricity. If c is used to represent the radial clearance, the eccentricity ratio $\varepsilon$ can be defined as *e*/*c*. $\delta$ is the angle in the circumferential direction starting from the negative axis of *r*. The big end journal bearing is a typical dynamically loaded journal bearing so the following Reynolds equation should be applied:

$$\frac{\partial}{\partial x}\left(\frac{h^3}{\mu}\frac{\partial p}{\partial x}\right) + \frac{\partial}{\partial z}\left(\frac{h^3}{\mu}\frac{\partial p}{\partial z}\right) = 6U\frac{\partial h}{\partial x} + 6h\frac{\partial U}{\partial x} + 12V \tag{5.2-1}$$

$$U = r_b\overline{\omega} + c\dot{\varepsilon}\sin\delta - c\varepsilon\dot{\alpha}\cos\delta, \tag{5.2-2}$$

$$V = c\dot{\varepsilon}\sin\delta + c\varepsilon\dot{\alpha}\cos\delta \tag{5.2-3}$$

Where $U$ and $V$ are the tangential velocity and normal velocity on the surface of the journal respectively, p is the oil film pressure, $\overline{\omega}$ is the relative angular velocity between the journal and bearing. $\mu$ is the viscosity of the lubrication oil.

On the right hand side of equation (5.2-1), the first term implies journal rotation on the wedge shaped oil film; the second term represents the velocity gradient across the film, the third term represents the effects of a squeeze film damper. It is very difficult to get the exact solution for Reynolds equation. However, if the first term on the left hand side of equation (5.2-1) is set to zero, Reynolds equation can be analytically solved as an infinitely short journal bearing. If the second term on the left hand side of equation (5.2-1) is set to zero, the analytical solution corresponds to the solution for an infinitely long journal bearing. Dubois and Ocvirk [as confirmed at Reference 15 below] derived the solution for the infinitely short journal bearing in their work. The solution for infinitely short journal bearing is reasonably valid for bearings with length to diameter ratio $(L_b/D_b)$ up to 0.5. The length to diameter ratio of the big-end bearings in small and medium size engines is less than 0.5, so the oil film pressure distribution in the big-end bearing can be solved as:

$$p = \frac{6\mu c}{h^3}\{\dot{\varepsilon}\cos\delta + \varepsilon(\dot{\alpha} - \overline{\omega})\sin\delta\}(y^2 - \frac{1}{4}L_b^2) \tag{5.2-4}$$

h is the thickness of the oil film and is equal to

$$h = \begin{cases} c(1 + \varepsilon\cos\delta) & for & \delta_i \leq \delta \leq \delta_{o1} \\ c(1 + \varepsilon\cos\delta) + h_e & for & \delta_{o1} < \delta \leq \delta_o \end{cases}$$

$$\tag{5.2-5}$$

In above equation, $h_e$ represents oil film thickness due to the elastic deformation in the bearing in the soft pad joint ($\delta_{o1} < \delta \leq \delta_o$). The elastic deformation of the bearing bush $h_e$ is computed by using Winkler surface model. It is worth to mention that the pressure distribution in equation 5.2-4 is inversely proportion to $h^3$. When the stiffness is decreased, the oil film thickness will be highly increased for the same applied pressure. Therefore, the pressure will be reduced in the interval $\delta_{o1} < \delta \leq \delta_o$ where the stiffness is less than the conventional stiffness (i. e., at soft pad joint).

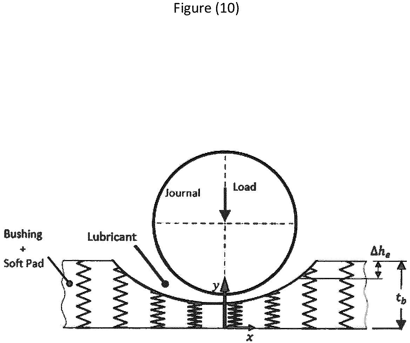

The elastic deformation of the bearing bush $h_e$ is computed by using Winkler surface model. The Winkler surface model is used to deal with the elastic deformation problem of the bearing bush and soft pad joint. In Winkler surface model which is known as elastic foundation model, the deformable object is modelled as a set of spring elements (figure 10) [as confirmed at Reference 13 below]. The shearing action between two neighboring elastic bar is neglected, so the real deformation at a point of the bearing bush surface is only dependent on the contact pressure at that point, the material and geometry parameters of the journal bearing. The elastic deformation equation of Winkler model can be written as:

$$h_e = \frac{p\, t_b}{E'} \qquad for\ \delta_{o1} < \delta \leq \delta_o \tag{5.2-6}$$

$$E' = \frac{1-v}{(1+v)(1-2v)}E_{sj} \tag{5.2-7}$$

Where $t_b$ is the thickness of the elastic foundation layer (bearing bush), and $E'$ is the combined elastic modulus of the journal and bearing soft joint. Where $E_{sj}$ is the equivalent Young's modulus of the bushing and soft pad which are connected in series, and $v$ is the Poisson's ratio. The pressure $p$ is obtained from equation 5.2-4.

The lubrication force can be integrated about the angle $\delta$. The normal force $F_r$ and tangential $F_t$ for the conventional con-rod big end joint can be written as:

$$F_r = - \int_{-L_{b/2}}^{-L_{b/2}} \left\{ \int_{\delta_i}^{\delta_o} p\, r_b cos\delta d\delta \right\} dy \qquad (5.2\text{-}6)$$

$$F_t = - \int_{-L_{b/2}}^{-L_{b/2}} \left\{ \int_{\delta_i}^{\delta_o} p\, r_b sin\delta d\delta \right\} dy \qquad (5.2\text{-}7)$$

And the normal force $F_r^M$ and tangential $F_t^M$ for the modified con-rod big end joint are given by:

$$F_r^M = - \int_{-L_{b/2}}^{-L_{b/2}} \left\{ \int_{\delta_i}^{\delta_{o1}} p\, r_b cos\delta d\delta + \int_{\delta_{o1}}^{\delta_o} p\, r_b cos\delta d\delta \right\} dy \qquad (5.2\text{-}8)$$

$$F_t^M = - \int_{-L_{b/2}}^{-L_{b/2}} \left\{ \int_{\delta_i}^{\delta_{o1}} p\, r_b sin\delta d\delta + \int_{\delta_{o1}}^{\delta_o} p\, r_b sin\delta d\delta \right\} dy \qquad (5.2\text{-}9)$$

Where $\delta_i$ is the start angle and $\delta_o$ is the end angle of the integration, figure 9. There are two boundary assumptions about the start and end coordinate angle; one is Sommerfeld boundary condition and the other is Gumbel boundary condition. Sommerfeld considered the oil film is a complete oil film and allowed for the existence of negative oil pressure, so the integration is carried out over the entire bearing circumference and $\delta_i$ = 0, $\delta_o$ = $2\pi$. However, as liquid normally cannot take negative pressure cavitation usually occur in the oil film in reality, Gumbel considered only the positive pressure section and assumed there is a Pi oil film in the bearing. In the integration, from $\delta_i$ to $\delta_o$ = $\delta_i + \pi$ can be calculated using:

$$\delta_i = \tan^{-1}\left(\frac{\dot{\varepsilon}}{\varepsilon(\dot{\alpha}-\overline{\omega})}\right) \qquad (5.2\text{-}10)$$

$$\delta_{o1} = \delta_{o1} + \frac{3}{2}\pi - \alpha - \theta_3 \qquad (5.2\text{-}11)$$

The Gumbel boundary condition is more realistic for the force integration of short journal bearings. Frene et al [Reference 14 below] has derived the analytical solution for the lubrication forces with Gumbel boundary condition for a short journal bearing and it can be used for the big-end bearing. On the other hand, the forces can be solved by a numerical approach in the computer simulation software, just by integrating the positive pressure section about $\delta$. Finally, the force components in the global XY coordinates can be derived by the transformation matrix about the angle coordinate $\alpha$. The forces components $(F_x, F_y)$ for the conventional con-rod big end joint are:

$$\begin{bmatrix} F_x \\ F_y \end{bmatrix} = \begin{bmatrix} cos\alpha & -sin\alpha \\ sin\alpha & cos\alpha \end{bmatrix} \begin{bmatrix} F_r \\ F_t \end{bmatrix} \qquad (5.2\text{-}12)$$

And the normal force $F_x^M$ and tangential $F_y^M$ for the modified con-rod big end joint are given by:

$$\begin{bmatrix} F_x^M \\ F_y^M \end{bmatrix} = \begin{bmatrix} cos\alpha & -sin\alpha \\ sin\alpha & cos\alpha \end{bmatrix} \begin{bmatrix} F_r^M \\ F_t^M) \end{bmatrix} \qquad (5.2\text{-}13)$$

**5.3 The interaction between the kinematic/kinetic system and the lubrication system**

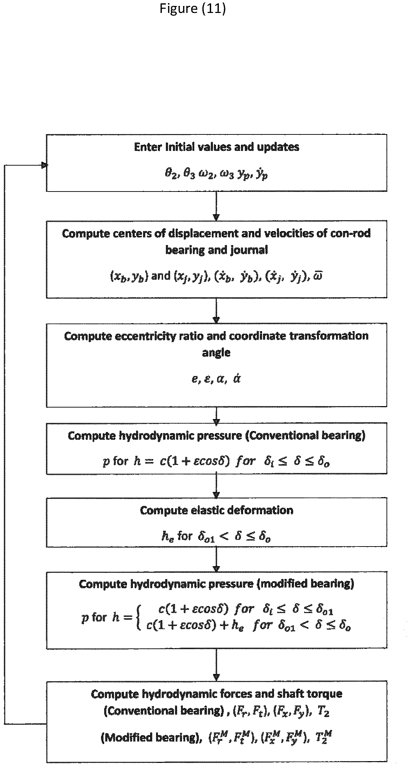

The scheme of the interaction between the kinematic/ kinetic system and the lubrication system is shown in Figure 11. The whole simulation model is a closed loop and it can be solved numerically in a step-by-step fashion. The inputs to the kinematic/kinetic system are the two lubrication force components: $F_x$ and $F_y$, and the outputs are the displacement parameters: $y_p$, $\theta_2$ and $\theta_3$ and the corresponding velocities $\dot{y}_p$, $\omega_2$ and $\omega_3$ since the inputs to the lubrication system are the eccentricity ratio $\varepsilon$, the coordinate angle $\alpha$ and their derivatives. The outputs from the kinematic/kinetic system should be transformed by interaction equations before inputting into the lubrication system. The eccentricity ratio $\varepsilon$ and its time derivative $\dot{\varepsilon}$, can be calculated from:

$$e_x = x_j - x_b, \quad e_y = y_j - y_b, \text{ and } \quad e = \sqrt{(e_x)^2 + (e_y)^2} \qquad (5.3\text{-}1)$$

$$\varepsilon = \frac{1}{c}\sqrt{(y_b - y_j)^2 + (x_b - x_j)^2} \qquad (5.3\text{-}2)$$

$$\dot{\varepsilon} = \frac{1}{ce}\left((x_b - x_j)(\dot{x}_b - \dot{x}_j) - (y_b - y_j)(\dot{y}_b - \dot{y}_j)\right) \qquad (5.3\text{-}3)$$

Where $x_b$ and $y_b$ are the displacements of the bearing centre, which can be calculated with equation (5.1-5). $x_j$ and $y_j$ are the displacements of the journal centre and can be calculated with equation (5.1-8). Regarding the coordinate angle $\alpha$ if it was solved from the inverse trigonometric function (arctangent), a problem could arise with infinity (at $\alpha = \frac{\pi}{2}$, $\alpha = \frac{3\pi}{2}$). Equations (5.3-4) and (5-3.5) involve the sine/cosine of the angle $\alpha$. The angle $\alpha$ and its time derivative are respectively calculated with equations (5.3-6) and (5.3-7).

**Figure 11 computational procedure:**

$$\sin\alpha = \frac{y_b - y_j}{e} \qquad (5.3\text{-}4)$$

$$\cos\alpha = \frac{x_b - x_j}{e} \qquad (5.3\text{-}5)$$

$$\alpha = 2\tan^{-1}\left(\frac{1 - \cos\alpha}{\sin\alpha}\right) \qquad (5.3\text{-}6)$$

$$\dot{\alpha} = \frac{1}{e^2}\left((x_b - x_j)(\dot{y}_b - \dot{y}_j) + (y_b - y_j)(\dot{x}_b - \dot{x}_j)\right) \qquad (5.3\text{-}7)$$

Figure 11 shows the simulation procedure to solve conventional and modified slider crank mechanism. As illustrated, the simulation model starts at zero crank angle relative to TDC in the firing stroke. The initial conditions for the kinematic integrator are provided. Based on the initial conditions, the displacements of the bearing centre and the journal centre were calculated first. Next, the lubrication forces are calculated for both the conventional and modified mechanisms. The crank torque is calculated for each mechanism, then the simulation loop continues to complete a cycle ($2\pi$).

**6 References**

References 4, 6, 7, 8 and 9 are not employed above in the description, but are useful background reading.

1. Heywood, J.B., et al. On the road toward 2050: Potential for substantial reductions in light-duty vehicle energy use and greenhouse gas emissions. Cambridge, Massachusetts : MIT Sloan Automotive Laboratory, 2015.
2. Heywood, J.B., Internal combustion engine fundamentals, McGraw-Hill.
3. NHTSA and EPA. 2017 and later model year light-duty vehicle greenhouse gas emissions and corporate average fuel economy standards: Final rule. Federal Register, 77(199):62623-63200.
4. EIA. Monthly Energy Review, DOW/EIA-0035(2013/03). s.1. : U.S. Energy Information Administration, 2013.
5. Bernard J. Hamrock, "Fundamentals of fluid film lubrication', NASA reference publication 1255.
6. Richard G. Budynas and J. Keith Nisbett, "Shigley's mechanical engineering design" , Tenth Edition, Mc Graw Hill.
7. Lankarani, H.M.and Nikravseh,P.E.,'Acontact forcemodel with hysteresis damping for impact analysis of multibody systems', Journal of Mechanical Design 112, 1990, 369-376.
8. Flores P, Ambrosio J, Claro J P. Dynamic analysis for planar multibody mechanical systems with lubricated joints. Multibody Syst Dyn, 2004, 12: 47-74
9. Flores P. A parametric study on the dynamic response of planar multibody systems with multiple clearance joints. Nonlinear Dyn, 2010, 61: 633-653
10. Chen J, Randall R, Feng N, Peeters B, Van der Auweraer H. Modelling and Diagnosis of Big-End Bearing Knock Fault in Internal Combustion Engines. Proceedings of the Institution of Mechanical Engineers, Part C: Journal of Mechanical Engineering Science 2014; 228: 2973-84.
11. Zweiri YH, Whidborne JF, Seneviratne LD. Detailed Analytical Model of a Single-Cylinder Diesel Engine in the Crank Angle Domain. Proceedings of the Institution of Mechanical Engineers, Part D: Journal of Automobile Engineering 2001; 215: 1197-216
12. Pinkus O and Sternlicht SA. Theory of hydrodynamic lubrication. New York, NY: McGraw-Hill Press, 1961.
13. Põdra P, Andersson S. Wear simulation with the Winkler surface model [J]. Wear, 1997, 207(1): 79-85.
14. Frene J, Nicolas D, Degneurce B, et al. Hydrodynamic lubrication - bearings and thrust bearings. Amsterdam, Netherlands: Elsevier, 1997.
15. Dubois GB and Ocvirk FW. Analytical derivation and experimental evaluation of short bearing approximation for fulljournal bearings, NACA report 1157, Washington, USA, 1953.

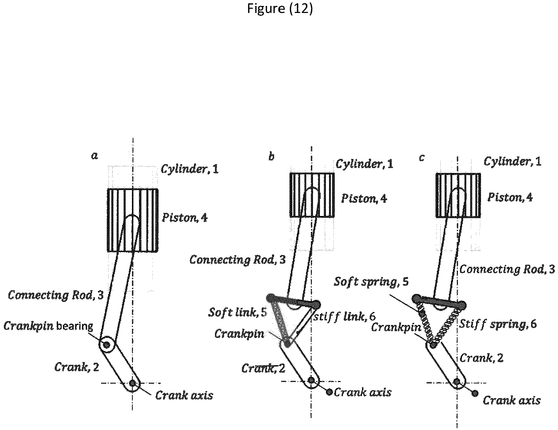

In order to explain the invention in another way, the results obtained in figure 2(d) are combined and presented using MSC Adams virtual prototyping platform. The software uses highly complex numerical schemes for both rigid and flexible body motions, hence avoiding the need to understand complicated mathematical formulas (since they are built-in the software). Using the software, the Applicant has developed an equivalent mechanism which has the same mobility as the conventional SCM but has two additional links and three additional joints. These two links enable the selection of different materials for the links. Two scenarios will be simulated. The first is by specifying the two links as steel (both will be stiff) hence simulating the conventional SCM. The second is by specifying one link as aluminium (soft) and the other as steel (stiff), hence simulating the invention. Figure 12a show the conventional SCM showing the four bodies and the joints (lower pairs). Figure 12b and 12c show its equivalent with six bodies and seven joints (lower pairs) with two links and two springs respectively.

To illustrate how the invention works, consider the SCM in its ideal case where joints are perfectly ideal as shown in figure 12a. Figure 12a shows the four bodies ($n = 4$) that constitute the conventional SCM. Body 1 is the ground (Cylinder block and frame), Body 2 is the crank, body 3 is the connecting rod and body 4 is the piston. These bodies (rigid links) are connected together by 4 lower pair joints ($J_L = 4$). The joints are 3 revolute (3R) and 1 prismatic (IP). The 3R are between the ground and the crank, between the crank and connecting rod and between the connecting rod and the piston. The IP is between the Piston and ground. The mobility m is computed from the formula:

$$m = 3(n-1) - 2J_L - J_H \qquad (1)$$

Where $J_H$ is higher pair.

In case of the ideal SCM we have:

$$n = 4, \; J_L = 4(= 3R + 1P), \; J_{H=0} \qquad (2)$$

Substituting from (2) into (1) we get the mobility $m = 1$

An equivalent slider crank mechanism is developed to facilitate the simulation process and to illustrate how the invention works. The obtained results show the efficiency of the invention. In the equivalent SCM shown in figures 12b and 12c, the contacts between the con rod and crank pin are represented by two force constraints to keep the mobility equal to 1 and in the same time to control these constraint forces. These two force constraints are represented by two massless links (5 and 6) with three revolute joints. Figure 12b shows the illustrating equivalent model where two equal massless links are hinged to the con rod and the crank pin with adding three more revolute joints to the conventional SCM. The two massless links have lengths corresponding to the radial distance between the con rod inner housing surface and the crank pin centre. Therefore, in the illustrating equivalent SCM model we have:

$$n = 6,\ J_L = 7(= 6R + 1P),\ J_{H=0} \qquad (3)$$

Substituting from (3) into (1) we still get the mobility $m = 1$ which proves the equivalency between the conventional and developed equivalent SCM in function.

Also, the massless links which are used to represent the connection between the con rod and the crank pin are mainly used for two reasons:

- The material can be selected for each link differently to serve for the invention objective

- The two links (5 and 6) can be replaced by two spring-damper system to be able to select the stiffness and damping for each spring as shown in figure 12c.

In use, referring to Figure 12(b), having in mind the different components and links, when a force is applied to the top of the piston, due to the imbalance between the softer part 5 and the stiffer part 6, the crank 2 rotates CCW towards the softer part. If the position of the softer part 5 and the stiffer link 6 is switched, the crank 2 rotates CW.

The following tables show the forces produced on the crankshaft at different points in the con rod / crankshaft cycle of motion, for the conventional system and the invention.

Tables 1 to 6 show the force applied which is equivalent to the gas force for both models (the conventional and modified).

Tables 1 to 6 include some graphs produced by the software and they illustrate the results. The graphs to the left show the results obtained from the conventional SCM mechanism and to the right are those of the invention.

| Conventional | Invention |
|---|---|
| Journal Bearing, $F_r = 21.42\ kN$, $F_t = 21.34\ kN$, $G = 26.4kN$, Crank axis | Journal Bearing, $F_r^M = 9.15kN$, $F_t^M = 2.99kN$, $G = 26.4kN$, Crank axis |
| • $\theta_2 = 0°$, TDC<br><br>• $K_{Soft}=k_{Stiff}=4000$ N/mm<br>Damping Coeffecients:<br>$C_{Soft}=C_{Stiff}=20Ns/m$<br>Damping ratio%=0.356 mode 1<br>Damping ratio%=0.883 mode 2<br><br>• Net Torque = 0<br>• Gas Force: STEP(TIME,0, 26.4, 0.02, 0)<br><br>• Natural frequencies/ Eigenvectors:<br><br>$\omega_{n1} = \lambda_1^{0.5} = 226.7Hz$, EigenVector1[1 0]<br>wn2=558.74Hz, EigenVector2 [0 1] | • $\theta_2 = 0°$, TDC<br><br>• $K_{Soft} = 400$, $C_{Soft} = 60Ns/m$<br>$k_{Stiff} = 4000$ N/mm, $C_{Stiff} = 20Ns/m$<br>Damping ratio%=4.17 mode 1<br>Damping ratio%=1.768 mode 2<br><br>• Net Torque =0.383kNm<br>• Gas Force: STEP(TIME, 0, 26.4,0.02,0 )<br><br>• Natural frequencies/ Eigenvectors:<br><br>$\omega_{n1}^M = \lambda_1^{M\ 0.5} = 90.5Hz$:<br>EigenVector1[0.832 0.555]<br>wn2=436.38Hz:EigenVector2[0.11 0.99] |
| Comments: In the conventional model the forces are equal, hence, they do not produce torque about the crank shaft axis (BAD). | Comments: The forces produced from the stiff and the soft joints are not equal and this results in a net torque of 0.383kNm (GOOD) |

Table 2 **At crank angle** $\theta_2$ **=22.5°** (right after top dead centre counter clockwise, expansion stroke) at points C2 and M2 in figure 1 $L_2$: 22.5°

| Conventional | Invention |
|---|---|
| *Journal Bearing* $F_t = 3.188kN$ $F_r = 5.38kN$ $G = 12kN$ *Crank axis* | *Journal Bearing* $F_t^M = 1.93kN$ $F_r^M = 8.2kN$ $G = 12kN$ *Crank axis* |
| • $\theta_2$ =22.5°, <br> • $K_{Soft}$ = $k_{Stiff}$ = 4000 N/mm <br><br> • Net Torque = 0.25 kNm <br> • Gas Force: <br> STEP( TIME , 0 ,12 , 0.02 , 0 ) | • $\theta_2$ =22.5°, <br> • $K_{Soft}$ = 400, $c_{Soft}$ = 60Ns/m <br> $k_{Stiff}$ = 4000 N/mm, $c_{Stiff}$ = 20Ns/m <br><br> • Net Torque = 0.51 kNm <br> • Gas Force: <br> STEP( TIME , 0 ,12 , 0.02 , 0 ) |
| Comments: notice how the net torque here (0.25 kNm) is less than that produced in the model simulating the invention. | Comments: notice how the net torque here (0.51 kNm) is double that produced by conventional engine. (GOOD) |

Table 3 At crank angle θ₂ = 45° (after top dead centre counter clockwise, expansion stroke) at points C3 and M3 in figure 2   $L_3$: 45°

| Conventional | Invention |
|---|---|
| $F_t^M = 1.7kN$  $G = 10.4kN$  Journal Bearing  Crank axis  $F_r^M = 5.6kN$ | $F_t^M = 0.5kN$  $G = 10.4kN$  Journal Bearing  Crank axis  $F_r^M = 6.16kN$ |
| • θ₂ = 45°,<br>• $K_{Soft}$ = $K_{Stiff}$ = 4000 N/mm, $c_{Stiff}$ = $c_{Soft}$ =20Ns/m<br><br>• Net Torque = 0.208 kNm<br>• Gas Force: STEP( TIME , 0 , 10.4 , 0.02 , 0 ) | θ₂ = 45°,<br>• $K_{Soft}$ = 400, $c_{Soft}$ = 60Ns/m $k_{Stiff}$ = 4000 N/mm, $c_{Stiff}$ = 20Ns/m<br><br>• Net Torque = 0.21 kNm<br>• Gas Force: STEP( TIME , 0 ,10.4 , 0.02 , 0 ) |
| Comments: The magnitude of the net torque in both models is very close and this continues more or less until the end of the expansion stroke. | |

Table 4 **At crank angle th2 = 90** (after top dead centre counter clockwise, expansion stroke)
$L_4$: 90°

| | |
|---|---|
| | |
| • $\theta_2 = 90°$, TDC<br>• $K_{Soft} = K_{Stiff} = 4000$ N/mm,<br>$\quad c_{Stiff} = c_{Soft} = 20$Ns/m<br><br>• Net Torque =0.0328kNm<br>• Gas Force:<br>$\quad$ STEP( TIME , 0 , 0.3 ,0.02 , 0 ) | • $\theta_2 = 90°$, TDC<br>• $K_{Soft} = 400$, $c_{Soft} = 60$Ns/m<br>$\quad k_{Stiff} = 4000$ N/mm, $c_{Stiff} = 20$Ns/m<br>• Net Torque =0.017kNm<br>• Gas Force:<br>$\quad$ STEP( TIME , 0 , 0.3 ,0.02 , 0 |
| Comments: The magnitude of the net torque (0.0328kNm GOOD) in both models is different. | Comments: The magnitude of the net torque (0.017kNm) which is less than that of the conventional mechanism (BAD). *The gas force is very small at this point. Therefore the energy loss due to the invention at this point is trivial.* |

Table 5 **At crank angle θ₂ = -45°** (compression stroke before top dead centre) between C3 and C4 and M5 in figure 2  $L_4$: $-45°$

| | |
|---|---|
| | |
| • θ₂ = -45° <br> • $K_{Soft}$ = $K_{Stiff}$ = 4000 N/mm, $c_{Stiff}$ = $c_{Soft}$ =20Ns/m <br> • Net Torque =-0.074kNm (resisting BAD) resisting Force: <br> • STEP( TIME , 0 ,1.5, 0.02 , 0 ) | • θ₂ = -45° <br> • $K_{Soft}$ = 400, $c_{Soft}$ = 60Ns/m $k_{Stiff}$ = 4000 N/mm, $c_{Stiff}$ = 20Ns/m <br> • Net Torque = -0.051kNm (resisting GOOD) resisting Force: <br> • STEP( TIME , 0 ,1.5, 0.02 , 0 ) |
| Comments: The net torque in this model is =-0.074kNm. This energy is consumed to pressurize the air in the combustion chamber, i.e., we have here more losses. | Comments: The net torque in this model is less negative than the conventional model and this means that the mechanism of the invention consumes less energy from the flywheel, which is good. |

Table 6 **At crank angle** $\theta_2$ = **-22.5°** (towards the end of compression stroke, just before top dead centre of the expansion stroke) at points C4 and between M1 and M5 in figure 2

$L_4$: −22.5°

| | |
|---|---|
| $G = 2kN$  Journal Bearing  $F_r = 1.55kN$  $F_t = 2.24\,kN$  Crank axis | $G = 2kN$  Journal Bearing  $F_r^M = 0.6kN$  $F_t^M = 0.38kN$  Crank axis |
| • $\theta_2$ = -22.5°<br>• $K_{Soft}$ = $K_{Stiff}$ = 4000 N/mm, $c_{Stiff}$ = $c_{Soft}$ =20Ns/m<br><br>• Net Torque = -0.1 kNm (resisting)<br>• resisting Force: STEP( TIME , 0 ,2 , 0.02 , 0 ) | • $\theta_2$ = -22.5°<br>• $K_{Soft}$ = 400, $c_{Soft}$ = 60Ns/m $k_{Stiff}$ = 4000 N/mm, $c_{Stiff}$ = 20Ns/m<br><br>• Net Torque =+ 0.058 kNm (helping)<br>• resisting Force: STEP( TIME , 0 ,2, 0.02 , 0 ) |
| Comments: The net torque is still negative, hence, this mechanism is still taking energy from the flywheel, which is bad. | Comments: The net torque here has become positive, hence, giving energy to the flywheel and transmission, which is very good. |

It will be appreciated from Tables 1 to 3 that in the invention net torque is higher for angles of $\theta_2$ = 0 to 45 degrees during the expansion phase.

It will be appreciated from Table 4 that in the invention net torque is less than that of the conventional mechanism at $\theta_2$ = 90° after top dead centre counter clockwise, during expansion stroke. But, gas force is very small at this point. Therefore, the energy loss due to the invention at this point is trivial.

It will be appreciated from Tables 5 and 6 that in the invention net torque is less negative than the conventional system at $\theta_2$ = **-45°** (compression stroke before top dead centre), and net torque becomes positive at $\theta_2$ = **-22.5°** (towards the end of compression stroke, just before top dead centre of the expansion stroke). Note, for the compression stroke, it is better to minimize the resistance of the air inside the combustion chamber where the energy is applied by the flywheel and rotating parts. Hence, a smaller negative net torque is better. A positive net torque is even better (as is the case for the invention model illustrated in table 6).

It will be appreciated from the above that the same soft piece provides torque benefits in the expansion phase and in the compression phase.

The softer material can be applied by powder metallurgy. Alternatively, the softer material can be applied by CVD technique.

It is important to note that the position of the geometrical recess depends on the direction of rotation of the crank. In another embodiment of the invention, which is not shown for conciseness, the crankshaft can be designed to rotate in a clockwise (CW) direction. In such a case, the soft pad would be positioned accordingly. Using Figure 7(b) to illustrate the position, the soft pad would be located approximately in the top right quadrant of the inside surface of the con rod big end, rather than in the top left quadrant as for a crankshaft rotating in a CCW direction.

It is also possible to implement the concept of the invention without making changes to the con rod. In another embodiment of the invention, not shown for conciseness, the crank pin of the crankshaft is changed in a way that is similar to the changes that would be done to the con rod in the previously mentioned embodiment. However, changing the con rod is probably a more practical implementation of the invention.

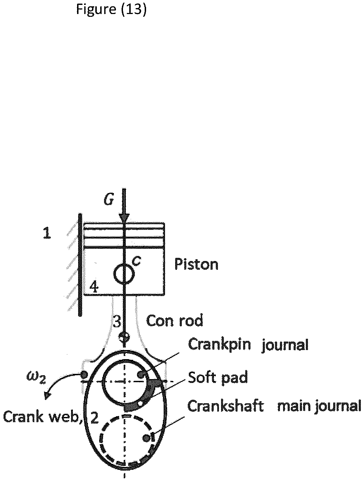

Referring to Figure 13, in yet another embodiment of the invention, similar results to the aforementioned embodiments of the invention can be obtained by utilising dissimilar stiffness on the crank web of the crankshaft, adjacent the crankpin journal, or on each crank web of the crankshaft, adjacent the crankpin journals.

The modifications can be done on the con rod big end + the crank pin + the crank webs simultaneously. In this case the values of the stiffness of the soft pads will be 3 times bigger than that of the soft pad stiffness if the modifications are used on the con rod alone. For example, stiffness of soft pad of con rod = k/10 when it is used on con rod alone, stiffness for each alternative soft pad = 3k/10 when it is used on the con rod big end + the crank pin + the crank webs simultaneously.

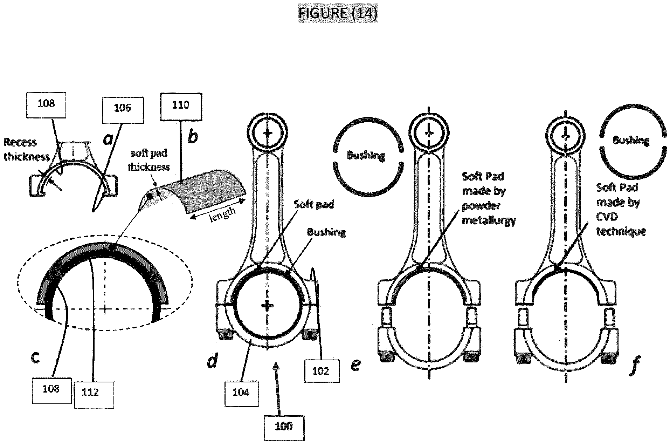

It is also possible to implement a similar concept of the invention by installing an extended soft pad in the con rod end big housing as shown in figures 14. This embodiment of the invention, is not illustrated in detail for conciseness. Figure 14 shows a Con rod big end 100. The con rod big end 100 comprises a big end first part 102 and a big end second part 104. The Big end first part 102 comprises a big end first part inside surface 106. The big end first part inside surface 106 is half of a generally circular cross section inside surface of the big end, the big end second part 104 providing the other half. In accordance with the invention, the big end first part inside surface 106 comprises a Big end first part inside surface recess 108. Also, in accordance with the invention, the assembly comprises a soft pad 110. The soft pad 110 is arranged in the recess 108, in such a way that the entire inside surface of the big end, including the inside surface of the soft pad, has a circular cross section. The soft pad 110 therefore sits between the inside surface of the big end and a (two-part) slider Bushing 112. In this way, at the location of the soft pad 110, the inside surface of the big end of the connecting rod has less stiffness with respect to the slider Bushing 112 and, consequently, with respect to the crank pin). The soft pad 110 extends from about -80 degrees before the TDC towards about 80 degrees from the TDC where the soft pad is geometrically symmetrical about the line passing through the con rod small end and the crank axis of rotation at the TDC.

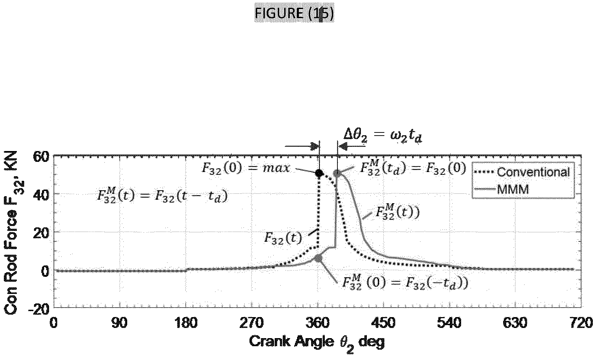

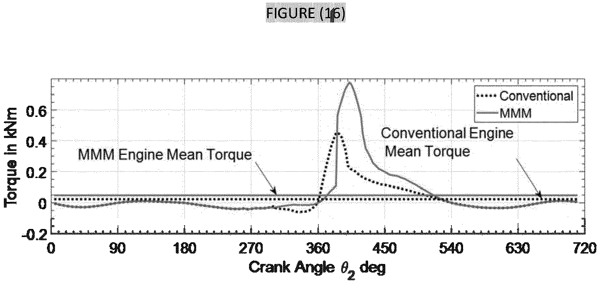

Good results for the net output torque (as shown in figures 15 and 16) are obtained when

- the soft pad stiffness $k_{32}^M$ is designed to be in the range $\frac{k_{32}}{6} \leq k_{32}^M \leq \frac{k_{32}}{3}$ where $k_{32}$ is the conventional bushing equivalent stiffness (including the lubricating oil effect).

Figures 15 and 16 shows test the results of a 1 cylinder 4 stroke engine with a con rod big end having an extended soft pad as shown in figures 14 and 15 . Starting by the cylinder pressure same as shown in figure 1, the forces on the con rod $F_{32}$ and $F_{32}^M$ where $F_{32}^M(t) = F_{32}(t - t_d)$ are shown in figure 15. The engine is running at $\omega_2$ = 3000 rpm $\Delta\theta_2 = \frac{\pi}{8}$, with time lag $t_d$ = 1.3 $ms$, $\beta \cong 3.4$, $k_{32} = 1 \times 10^6 \frac{N}{m}$ (the stiffness value is just for the m illustrative example) Figure 16 shows the crank output torque for the conventional and MMM engines. The conventional engine has mean torque = 0.023 kNm while the MMM engine has a mean torque =0.0483 kNm with percentage increase of 110% which is a great achievement.

Figure 15 reflects how the gas pressure force G (see curve 3 - 4, on the 4 stroke PV-diagram, figure 1) is transferred by the MMM engine compared with conventional engine. In figure 15 the effect of the MMM system on the transferred con rod $F_{32}$ where the force $F_{32}^M$ applied on the crank pin is lagged a time $t_d$. The MMM con rod force just before and during the expansion stroke is lagged a time $t_d$. The effect of the lagged force is shown in Figure 16 where the output torque of the conventional and MMM engines are compared. Figure 16 shows at just before point 2 on the curve 1' - 2 (compression stroke in figure 1) the modified SCM engine (i.e. the MMM) has a small negative torque compared to bigger negative torque of the conventional SCM. Figure 16 also shows at point 3 on the 4 stroke PV-diagram (see figure 1) at which the modified SCM engines has improved gas force transfer into higher crank torque more than for a conventional SCM.

**Claims**

1. An internal combustion engine crankshaft and connecting rod assembly, the crankshaft and connecting rod assembly comprising a crankshaft, a connecting rod, the crankshaft has a predesigned direction of rotation, the connecting rod comprising a big end, the big end comprising an inner mating surface, the assembly also comprising a slider bearing arranged between the inner mating surface of the big end and a crank throw/crank pin of the crankshaft, wherein the big end comprises a first part made of a first material, and the big end comprises a second part made of a second material, the first part and the second part together form the inner mating surface, the second material being different to the first material, the second material being less stiff (in other words, softer) than the first material, so that the second part provides less pressure on a crankshaft.

2. An internal combustion engine crankshaft and connecting rod assembly according to Claim 1, wherein the second part is arranged in a recess defined in the first part, and the entire inside surface of the big end, including the inside surface of the first part and the second part, has a circular cross section that cooperates with the slider bearing.

3. An internal combustion engine crankshaft and connecting rod assembly according to Claim 1 or 2, wherein the second part extends about the inner mating surface from a first position on the inner mating surface which is about the nearest to the small end of the con rod, to a second position on the inner mating surface which is about half way between the first position on the inner mating surface and a third position on the inner mating surface which is about the furthest from the small end of the con rod, i.e. the second part extends from about the TDC to about 90 degrees after the TDC.

4. An internal combustion engine crankshaft and connecting rod assembly according to Claim 3, wherein the second part extends from about the TDC to a point between about 45 degrees after the TDC and about 90 degrees after the TDC.

5. An internal combustion engine crankshaft and connecting rod assembly according to any one or more of Claims 3 and 4, wherein the second part additionally extends from a position just before the TDC to the TDC.

6. An internal combustion engine crankshaft and connecting rod assembly according to any one or more of Claims 1 to 5, wherein the second part is applied to the first part by glue.

7. An internal combustion engine crankshaft and connecting rod assembly according to any one or more of Claims 1 to 5, wherein the second part is applied to the first part by powder metallurgy.

8. An internal combustion engine crankshaft and connecting rod assembly according to any one or more of Claims 1 to 5, wherein the second part is applied to the first part by Chemical Vapour Deposition (CVD).

9. An internal combustion engine crankshaft and connecting rod assembly according to any one or more of Claims 1 to 8, wherein the thickness of the second part in the direction of the circumference of the inner mating surface is uniform.

10. An internal combustion engine crankshaft and connecting rod assembly according to Claim 9, wherein the thickness of the second part in the direction of the circumference of the inner mating surface is about the same or greater than the thickness of the slider bearing.

11. An internal combustion engine connecting rod for driving an internal combustion engine crankshaft via a slider bearing, the connecting rod comprising a big end, the big end comprising an inner mating surface for receiving a bearing, wherein the big end comprises a first part made of a first material, and the big end comprises a second part made of a second material, the first part and the second part together form the inner mating surface, the second material being different to the first material, the second material being less stiff (in other words, softer) than the first material, so that the second part provides less pressure on a bearing, and consequently on a crankshaft.

12. An internal combustion engine connecting rod according to Claim 11, wherein the second part is arranged in a recess defined in the first part, and the entire inside surface of the big end, including the inside surface of the first part and the second part, has a circular cross section that cooperates with the slider bearing.

13. An internal combustion engine connecting rod according to Claim 11 or 12, wherein the second part extends about the inner mating surface from a first position on the inner mating surface which is about the nearest to the small end of the con rod, to a second position on the inner mating surface which is about half way between the first position on the inner mating surface and a third position on the inner mating surface which is about the furthest from the small end of the con rod, i.e. the second part extends from a position on the con rod which corresponds to about the TDC to a position on the con rod which corresponds to about 90 degrees after the TDC.

14. An internal combustion engine connecting rod according to Claim 13, wherein the second part extends from a position on the con rod which corresponds to about the TDC to a point on the con rod which corresponds to between about 45 degrees after the TDC and about 90 degrees after the TDC.

15. An internal combustion engine connecting rod according to any one or more of Claims 13 and 14, wherein the second part additionally extends from a position just before the TDC to the TDC.

16. An internal combustion engine crankshaft and connecting rod assembly according to any one or more of Claims 11 to 15, wherein the second part is applied to the first part by glue.

17. An internal combustion engine crankshaft and connecting rod assembly according to any one or more of Claims 11 to 15, wherein the second part is applied to the first part by powder metallurgy.

18. An internal combustion engine crankshaft and connecting rod assembly according to any one or more of Claims 11 to 15, wherein the second part is applied to the first part by Chemical Vapour Deposition (CVD).

19. An internal combustion engine crankshaft and connecting rod assembly according to any one or more of Claims 1 to 18, wherein the thickness of the second part in the direction of the circumference of the inner mating surface is uniform.

20. An internal combustion engine crankshaft and connecting rod assembly according to Claim 19, wherein the thickness of the second part in the direction of the circumference of the inner mating surface is about the same or greater than the thickness of the slider bearing.

21. An internal combustion engine crankshaft for being driven by an internal combustion engine connecting rod via a slider bearing, the crankshaft comprising comprises a first part made of a first material, and the crankshaft comprises a second part made of a second material, the first part and the second part together form the outer mating surface of the crankshaft pin, the second material being different to the first material, the second material being less stiff (in other words, softer) than the first material, so that the second part provides less pressure on the big end of the connecting rod.

22. An internal combustion engine crankshaft according to Claim 21, wherein the crankshaft comprises a crank throw/crank pin, and wherein the crank throw/crank pin comprises the first part made of a first material, and the second part made of a second material.

23. An internal combustion engine crankshaft according to Claim 21 or 22, wherein the crankshaft comprises webs, and wherein the webs comprise the first part made of a first material, and the second part made of a second material.

24. An internal combustion engine crankshaft and connecting rod assembly, the crankshaft and connecting rod assembly comprising a crankshaft in accordance with any one or more of Claims 21 to 23.

25. An internal combustion engine crankshaft and connecting rod assembly according to Claim 3, wherein the second part extends from about -80 degrees to the TDC to about +80 degrees after the TDC.

26. An internal combustion engine crankshaft and connecting rod assembly according to any one or more of Claims 3 and 25, wherein the second part additionally extends from a position -80 degrees before the TDC to the TDC to +80degrees after the TDC.

27. An internal combustion engine connecting rod according to Claim 11 or 12, wherein the second part extends about the inner mating surface from a first position on the inner mating surface which is about the nearest to the small end of the con rod, to a second position on the inner mating surface which is about half way between the first position on the inner mating surface and a third position on the inner mating surface which is about the furthest from the small end of the con rod, i.e. the second part extends from a position on the con rod big end housing which corresponds to about -80 degree before the TDC to the TDC to a position on the con rod big end housing which corresponds to about +80 degrees after the TDC.

28. An internal combustion engine connecting rod according to Claim 27, wherein the second part extends from a position on the con rod big end housing which corresponds to about between (-80 degrees and -85 degrees) before the TDC to the TDC to a point on the con rod big end housing which corresponds to between about 80 degrees and 85 degrees after the TDC.

**29.** An internal combustion engine connecting rod according to any one or more of Claims 27 and 28, wherein the second part additionally extends from a position before the TDC to and beyond the TDC, where the second part is geometrically symmetrical about the TDC.

Figure (1)

Figure (2)

Figure 2(d)

Figure (3)

Figure (4)

Figure (5)

Figure (6)

$$\omega_r = \omega_2 - \omega_3 \qquad \Delta\varphi^M = \varphi_t^M - \varphi_r^M$$

$$\Delta\varphi^M = \alpha - \theta_2$$

Figure (7)

Figure (8)

Figure (9)

Figure (10)

Figure (11)

Flowchart:

**Enter initial values and updates**

$\theta_2, \theta_3 \, \omega_2, \omega_3 \, y_p, \dot{y}_p$

↓

**Compute centers of displacement and velocities of con-rod bearing and journal**

$(x_b, y_b)$ and $(x_j, y_j)$, $(\dot{x}_b, \dot{y}_b)$, $(\dot{x}_j, \dot{y}_j)$, $\bar{\omega}$

↓

**Compute eccentricity ratio and coordinate transformation angle**

$e, \varepsilon, \alpha, \dot{\alpha}$

↓

**Compute hydrodynamic pressure (Conventional bearing)**

$p$ for $h = c(1 + \varepsilon \cos\delta)$ for $\delta_i \leq \delta \leq \delta_o$

↓

**Compute elastic deformation**

$h_e$ for $\delta_{o1} < \delta \leq \delta_o$

↓

**Compute hydrodynamic pressure (modified bearing)**

$p$ for $h = \begin{cases} c(1 + \varepsilon \cos\delta) & \text{for } \delta_i \leq \delta \leq \delta_{o1} \\ c(1 + \varepsilon \cos\delta) + h_e & \text{for } \delta_{o1} < \delta \leq \delta_o \end{cases}$

↓

**Compute hydrodynamic forces and shaft torque**

(Conventional bearing) , $(F_r, F_t)$, $(F_x, F_y)$, $T_2$

(Modified bearing), $(F_r^M, F_t^M)$, $(F_x^M, F_y^M)$, $T_2^M$

Figure (12)

Figure (13)

FIGURE (14)

FIGURE (15)

FIGURE (16)

Europäisches
Patentamt

European
Patent Office

Office européen
des brevets

**EUROPEAN SEARCH REPORT**

Application Number

EP 19 18 6064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 745 740 B1 (DECUIR ALEX [US]) 8 June 2004 (2004-06-08) * column 7, line 58 - column 9, line 6; figures 5-7,11-13 * | 1-20, 25-29 | INV. F02B75/04 F01M1/00 F01M1/06 F02B75/32 |
| X | US 2017/122376 A1 (REICH STEVEN A [US] ET AL) 4 May 2017 (2017-05-04) * paragraph [0025] - paragraph [0035]; figures 2-8 * | 1,2, 4-12, 14-20, 27,29 | F16C7/04 F16C9/04 F16C11/02 F16C27/00 |
| X | GB 542 372 A (BOLINDER MUNKTELL) 6 January 1942 (1942-01-06) * page 2, line 4 - line 102; figure 2 * | 1,2, 4-12, 14-20, 27,29 | |
| X | DE 199 25 000 A1 (VOLTCHKOV VLADIMIR [DE]) 7 December 2000 (2000-12-07) * page 3, line 30 - line 66; figure 1 * | 1,2, 4-12, 14-20, 27,29 | TECHNICAL FIELDS SEARCHED (IPC) F02B F01M |
| A | US 1 931 026 A (LEE ROGER K) 17 October 1933 (1933-10-17) * page 1, line 36 - page 2, line 2; figures 2-5 * | 1-29 | F16C |

The present search report has been drawn up for all claims

| Place of search | Date of completion of the search | Examiner |
|---|---|---|
| Munich | 18 February 2020 | Tietje, Kai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 6064

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2020

| Patent document cited in search report | | Publication date | Patent family member(s) | | Publication date |
|---|---|---|---|---|---|
| US 6745740 | B1 | 08-06-2004 | US | 6745740 B1 | 08-06-2004 |
| | | | WO | 2004072463 A1 | 26-08-2004 |
| US 2017122376 | A1 | 04-05-2017 | EP | 3163101 A1 | 03-05-2017 |
| | | | US | 2017122376 A1 | 04-05-2017 |
| GB 542372 | A | 06-01-1942 | NONE | | |
| DE 19925000 | A1 | 07-12-2000 | NONE | | |
| US 1931026 | A | 17-10-1933 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HEYWOOD, J.B. et al.** On the road toward 2050: Potential for substantial reductions in light-duty vehicle energy use and greenhouse gas emissions. MIT Sloan Automotive Laboratory, 2015
- **HEYWOOD, J.B.** Internal combustion engine fundamentals. McGraw-Hill
- NHTSA and EPA. 2017 and later model year light-duty vehicle greenhouse gas emissions and corporate average fuel economy standards: Final rule. *Federal Register,* vol. 77 (199), 62623-63200
- EIA. Monthly Energy Review, DOW/EIA-0035(2013/03). s.1. *U.S. Energy Information Administration,* 2013
- **BERNARD J. HAMROCK.** Fundamentals of fluid film lubrication. *NASA reference publication 1255*
- **RICHARD G. BUDYNAS ; J. KEITH NISBETT.** Shigley's mechanical engineering design. Mc Graw Hill
- **LANKARANI, H.M. ; NIKRAVSEH,P.E.** Acontact forcemodel with hysteresis damping for impact analysis of multibody systems. *Journal of Mechanical Design,* 1990, vol. 112, 369-376
- **FLORES P ; AMBROSIO J ; CLARO J P.** Dynamic analysis for planar multibody mechanical systems with lubricated joints. *Multibody Syst Dyn,* 2004, vol. 12, 47-74

- **FLORES P.** A parametric study on the dynamic response of planar multibody systems with multiple clearance joints. *Nonlinear Dyn,* 2010, vol. 61, 633-653
- **CHEN J ; RANDALL R ; FENG N ; PEETERS B ; VAN DER AUWERAER H.** Modelling and Diagnosis of Big-End Bearing Knock Fault in Internal Combustion Engines. Proceedings of the Institution of Mechanical Engineers. *Journal of Mechanical Engineering Science,* 2014, vol. 228, 2973-84
- **ZWEIRI YH ; WHIDBORNE JF ; SENEVIRATNE LD.** Detailed Analytical Model of a Single-Cylinder Diesel Engine in the Crank Angle Domain. *Proceedings of the Institution of Mechanical Engineers, Part D: Journal of Automobile Engineering,* 2001, vol. 215, 1197-216
- **PINKUS O ; STERNLICHT SA.** Theory of hydrodynamic lubrication. McGraw-Hill Press, 1961
- **PÕDRA P ; ANDERSSON S.** Wear simulation with the Winkler surface model [J. *Wear,* 1997, vol. 207 (1), 79-85
- **FRENE J ; NICOLAS D ; DEGNEURCE B et al.** Hydrodynamic lubrication - bearings and thrust bearings. Elsevier, 1997
- Analytical derivation and experimental evaluation of short bearing approximation for fulljournal bearings. **DUBOIS GB ; OCVIRK FW.** NACA report 1157. 1953